# EUROPEAN PATENT SPECIFICATION

(11) **EP 4 606 207 B1**
(45) Date of publication and mention of the grant of the patent: **11.03.2026**
(21) Application number: 24159554.5
(22) Date of filing: 26.02.2024
(51) Int. Cl.: A01G 3/025

(54) **CUTTING TOOL**
SCHNEIDWERKZEUG
OUTIL DE COUPE

(43) Date of publication of application: 27.08.2025
(73) Proprietor: Husqvarna AB, 561 82 Huskvarna (SE)
(72) Inventor: Kistler, Michael, 89185 Hüttisheim (DE)
(74) Representative: Finkele, Rolf

(56) References cited:
- EP-A1- 2 022 320
- EP-B1- 3 876 696
- GB-A- 2 605 369

## Description

### TECHNICAL FIELD

The present disclosure relates to a cutting tool, in particular a lopper, with an elongated handle for cutting tree branches, twigs, and shrubs.

### BACKGROUND

A cutting tool, particularly a lopper, may include an elongated handle that may offer easier cutting of branches or twigs, which may be difficult to access as they may be high lying. The elongated handle includes a first end and a second end, wherein the first end is opposite to the second end. The cutting tool includes a cutting head that is attached to the first end of the elongated handle and is configured to perform a cutting action. Further, the cutting tool may include a pulling sleeve that is provided on the elongated handle between the first end and the second end, wherein the pulling sleeve is movable relative to the elongated handle. The cutting head and the pulling sleeve are operatively connected to each other via a pulling means, for example a pulling belt or a pulling strap. The movement of the cutting head is done by virtue of the pulling means, wherein the pulling means transmits a pulling force that is caused by a movement of the pulling sleeve to the cutting head in order to perform the cutting action.

Further, the pulling means is fastened to the pulling sleeve by making a sufficiently large knot using an end of the pulling means. However, making, and opening knots as per requirement may be time consuming and may require good dexterity.

An example of a cutting tool is provided in European Patent EP 2 979 538 B1 (hereinafter referred to as '538 reference). The '538 reference provides a pruning shears that includes a shear assembly mounted to an upper end of a pole of the pruning shears. The shear assembly is actuated by an actuating device also provided with the pole. The actuating device actuates the shear assembly using a pull cable, one end of which is connected to the shear assembly and the other end of which is connected to the actuating device. The pull cable is connected to the actuating device using a fastening point. Other examples of cutting tools are disclosed by EP2022320A1 and GB2605369A.

### SUMMARY OF THE INVENTION

In view of the above, it is an objective of the present invention to solve or at least reduce the drawbacks discussed above. The objective is at least partially achieved by a cutting tool.

According to an aspect of the present invention, the cutting tool, particularly a lopper, comprises an elongated handle. The elongated handle comprises a first end and a second end. The second end is opposite to the first end. A cutting head is mounted to the first end of the elongated handle and a pulling sleeve is mounted to the elongated handle at a position between the first end and the second end. The pulling sleeve is movable relative to the elongated handle along an extension of the elongated handle. A pulling means is arranged at least partially in the elongated handle such that a force is transmittable from the pulling sleeve to the cutting head via the pulling means. An end of the pulling means is fastened to the pulling sleeve by a fastening device, wherein the fastening device comprises a mounting portion at which the fastening device is mounted to the pulling sleeve. The cutting tool is characterized in that the fastening device further comprises a first wrapping element and a second wrapping element positioned adjacent to the first wrapping element. The end of the pulling means is guided between and around the first wrapping element and the second wrapping element such that different parts of the end of the pulling means superimpose each other such that under a tensile force the pulling means tightens around the first wrapping element and the second wrapping element.

The present disclosure provides an improved cutting tool, particularly an improved lopper, which may advantageously comprise the fastening device to fasten the end of the pulling means with the pulling sleeve. The fastening device may substantially prevent retraction of the pulling means. In other words, the fastening device may prevent the end of the pulling means from inadvertently getting disengaged or disconnected from the pulling sleeve when the pulling sleeve may be moved relative to the elongated handle to operate the cutting head. The fastening device may provide easy, ergonomic, fast, and adjustable fastening of the pulling means with the pulling sleeve. The fastening device may be simple in design and manufacture. The fastening device may easily be inserted into the pulling sleeve for fastening the pulling means with the pulling sleeve. The fastening may ensure smooth and uninterrupted working of the lopper, or any other related cutting tool.

Superimposing different parts of the end of the pulling means with each other according to the present disclosure may denote that different parts of the pulling means may overlay over each other in order to completely wrap the end of the pulling means around the fastening device, particularly the first wrapping element and the second wrapping element, for securely fastening the end of the pulling means with the fastening device housed or mounted inside of the pulling sleeve.

The pulling means tightens around the first wrapping element and the second wrapping element under a tensile force according to the present disclosure may denote that the end of the pulling means upon being completely wrapped around the first wrapping element and the second wrapping element tightly press upon the respective first wrapping element and the second wrapping element when the tensile force is applied to the end of the pulling means. Such an arrangement of the end of the pulling means around the first wrapping element and the second wrapping may substantially prevent the end of the pulling means from slipping when the tensile force is applied on the end of the pulling means.

According to an exemplary embodiment of the invention, the fastening device is fastened to, particularly screwed into, the pulling sleeve, more particularly screwed by using at least one screw. The fastening device may be mounted to the pulling sleeve using commonly known and easy to implement at least one fastener such as a screw. The screw may allow easy mounting and unmounting of the fastening device from the pulling sleeve as well as a reliable connection of the fastening device in the pulling sleeve.

According to an exemplary embodiment of the invention a position of the fastening device on the end of the pulling means is movable and adjustable relative to the pulling means when the fastening device is loosened and/or unmounted from the pulling sleeve. When the pulling means may become elongated or slack during the lifecycle of the cutting tool and/or the pulling means during repeated usage of the pulling means to implement a cutting action, the performance or efficiency of the cutting tool may hamper. In order to restore the performance of the cutting tool, the fastening device may be unmounted from the pulling sleeve and the end of the pulling means or the pulling means in general may be adjusted relative to the fastening device. After adjusting and remounting of the fastening device on the pulling sleeve, the pulling means may (again) be able to efficiently transfer the force from the pulling sleeve to the cutting head to actuate the blades of the cutting head to perform the cutting action.

According to an exemplary embodiment of the invention, the first wrapping element and/ or the second wrapping element is configured such that the pulling means is prevented from slipping, when the pulling means is tightened. The tightening of the pulling means may result in pressing upon the first wrapping element and the second wrapping element by the pulling means. This may lead to robust engagement between the pulling means and the fastening device. Thereby, a slipping of the pulling means may be prevented.

According to a further exemplary embodiment of the invention, the pulling sleeve comprises a first cylindrical part being in contact with the elongated handle, an inclined part, and a second cylindrical part. The inclined part interconnects the first cylindrical part and the second cylindrical part. Further, the inclined part and the second cylindrical part form a receptacle configured to insert the fastening device. The fastening device may preferably have a substantially wedge-shape structure that may easily fit into the receptacle of the pulling sleeve without interfering with the movement of the pulling sleeve relative to the elongated handle on which the pulling sleeve may be movably mounted.

According to an exemplary embodiment of the invention, the first wrapping element comprises a substantially arrow-shaped elongated cross-section, and/ or the first wrapping element comprises six contact surfaces, which are configured to contact the pulling means. The substantially arrow-shaped elongated cross-section of the first wrapping element because of the particular shape may substantially imply a force opposing a slipping of the end of the pulling means. At least a part of the different contact surfaces of the substantially arrow-shaped elongated cross-section may provide a counterforce against the tensile force being acted upon the end of the pulling means. Further, the substantially arrow-shaped elongated cross-section may allow superimposition of different parts of the end of the pulling means to further strengthen the engagement between the pulling means and the arrow-shaped elongated cross-section and thereby prevent any slippage due to action of tensile force on the end of the pulling means during the working of the cutting tool. Alternatively, the first wrapping element may have a different shape and size feasible enough to substantially prevent slipping of the end of the pulling means when the end of the pulling means may be wrapped around the first wrapping element and may further be acted upon by the tensile force, which may occur due to movement of the pulling sleeve in the direction away from the cutting head.

The substantially arrow-shaped elongated cross-section comprises a plane defined parallel to the extension of the elongated handle and/ or along the plane defined parallel to, particularly comprises, a longitudinal axis of the cutting tool.

According to an exemplary embodiment of the invention, the second wrapping element comprises a substantially triangular cross-section, and/or the second wrapping element comprises three contact surfaces. The substantially triangular cross-section of the second wrapping element may prevent slipping of the end of the pulling means when the substantially triangular cross-section of the second wrapping element may work in combination with the substantially arrow-shaped elongated cross-section of the first wrapping element. The substantially triangular cross-section of the second wrapping element may also provide contact surfaces that may provide counterforce against the tensile force acting on the end of the pulling means wrapped upon it. Alternatively, the second wrapping element may have a different shape and size feasible enough to substantially prevent slipping of the end of the pulling means when the end of the pulling means may be wrapped around the second wrapping element and may further be acted upon by the tensile force. Further, the first wrapping element and the second wrapping element may have similar or different shape and size.

The substantially triangular cross-section comprises a plane parallel to the extension of the elongated handle and/ or along the plane defined parallel to a longitudinal axis of the cutting tool.

According to an exemplary embodiment of the invention, the end of the pulling means is guided between and around the first wrapping element and the second wrapping element of the fastening device by firstly guiding the end of the pulling means loosely over the first wrapping element followed by at least partially engaging with each of the three contact surfaces of the second wrapping element before at least partially engaging with each of the six contact surfaces of the first wrapping element. Further, the parts of the end of the pulling means which are at least partially engaged with the at least three contact surfaces of the first wrapping element are superimposed by the parts of the end of the pulling means loosely guided over the first wrapping element. The end of the pulling means may be guided between and around the first wrapping element and the second wrapping element in a manner such that the end of the pulling means may be tightly secured or fastened in the pulling sleeve without having to worry about the chances of retraction of the pulling means towards the cutting head of the cutting tool.

The phrase guiding the end of the pulling means loosely over the first wrapping element according to the present invention may imply that any engagement between the end of the pulling means and the first wrapping element may be discontinued without applying any substantial force, or the end of the pulling means may not engage at all with the first wrapping element when the end of the pulling means is guided loosely over the first wrapping element.

According to an exemplary embodiment of the invention, the pulling sleeve comprises a first cylindrical part being in contact with the elongated handle, an inclined part, and a second cylindrical part. The inclined part interconnects the first cylindrical part and the second cylindrical part. The inclined part and the second cylindrical part form the receptacle configured to insert the fastening device. Further, the different parts of the end of the pulling means that superimpose each other are sandwiched between the first wrapping element and the inner surface of the inclined part. Additionally or alternatively, the first wrapping element and the pulling sleeve respectively exhibit opposite, in particular equal, forces on the different parts of the end of the pulling means that superimpose each other. The fastening device and the pulling sleeve may apply equal and opposite forces on the end of the pulling means, particularly the superimposed parts of the end of the pulling means, when the end of the pulling sleeve is guided between and around the first wrapping element and the second wrapping element. The equal and opposite force application may substantially prevent the end of the pulling means from retraction.

According to an exemplary embodiment of the invention, a position of the first wrapping element is nearer to the cutting head of the cutting tool than a position of the second wrapping element. Thereby, the pulling means may be subsequently wrapped around the first wrapping element and the second wrapping element, and the pulling means may be in contact with an elongated area of the inner surface of the pulling sleeve. Hence, the retention force of the pulling means within the pulling sleeve may be increased.

According to an exemplary embodiment of the invention, the first wrapping element is disposed behind the second wrapping element when seen along an extension of the elongated handle, from the second end towards the first end. The first wrapping element and the second wrapping element may be arranged such that when the end of the pulling means may be guided between and around the first wrapping element and the second wrapping element, the end of the pulling means may be able to negate the effect of the tensile force which may act upon the end of the pulling means from time to time during the life cycle of the cutting tool. Additionally, by arranging the first wrapping element and the second wrapping element accordingly, the pulling means may contact an increased area of the different contact surfaces. Hence, the retention force may be increased.

According to an exemplary embodiment of the invention, the first wrapping element and the second wrapping element form a ladder buckle. The fastening device may substantially mimic the ladder buckle to provide two-fold protection to the end of the pulling means against the tensile force. In other words, the fastening device may allow the end of the pulling means to be wrapped around two adjacent wrapping elements to secure the engagement between the fastening device and the end of the pulling means and decrease the chance of retraction of the end of the pulling means.

According to an exemplary embodiment of the invention, the elongated handle is a telescopic elongated handle, wherein the elongated handle comprises at least two, particularly three, handle portions being telescopically movable into each other. The telescopic elongated handle may advantageously increase the range of the cutting tool such that the cutting tool may be used to perform cutting action at different distances from the user, particularly closer or farer away from the user as per requirement.

According to an exemplary embodiment of the invention, the pulling means is a pulling belt. The pulling means may be the pull belt, a pull strap, a pull cable, or a pull rope. The pulling means may be feasible enough to transfer the force from the pulling sleeve to the cutting head such that the cutting head may be able to perform the cutting action.

According to an exemplary embodiment of the invention, the cutting tool comprises a pull handle provided at the second end of the elongated handle, and the pull handle is movable relative to the elongated handle. Thereby, the cutting head may be actuated either by the pull handle or by the pulling sleeve primarily dependent on the needed cutting force. Hence, a versatile usable cutting tool may be providable.

Before discussing the invention with reference to the drawings, the invention will be briefly discussed in general. A fastening device may be provided which may be in the form of a ladder buckle that may be used to fasten some part of a pulling means, particularly an end of the pulling means, inside a pulling sleeve. The pulling means may be wrapped several times through the fastening device such that some part of the end of the pulling means may superimpose. The end of the pulling means may be wrapped several times through the fastening device in a manner such that the end of the pulling means may tighten under tensile force and prevent slippage of the end of the pulling means from the fastening device. Further, a position of the fastening device relative to the pulling means may be altered or changed when the fastening device may be unmounted from the pulling sleeve and after alteration the fastening device may be remounted to the pulling sleeve, particularly via screwing. In this process, the pulling means may be additionally crimped and thus doubly secured with the fastening device. Further, if the pulling means may elongate during a lifecycle of the cutting tool, the pulling means may be reset by unmounting the fastening device from the pulling sleeve.

The fastening device according to the present invention may have fast and uncomplicated assembly. The fastening device according to the present invention may be adjustable before and after usage. The fastening device according to the present invention may be user-friendly.

Other features and aspects of this invention will be apparent from the following description and the accompanying drawings.

### BRIEF DESCRIPTION OF THE DRAWINGS

The invention will be described in more detail with reference to the enclosed drawings, wherein:
FIG. 1 illustrates a perspective view of a cutting tool in accordance with an exemplary embodiment of the present disclosure;
FIG. 2 illustrates a cross-sectional view of a pulling sleeve in accordance with an exemplary embodiment of the present disclosure;
FIG. 3 illustrates a perspective view of a fastening device in accordance with an exemplary embodiment of the present disclosure;
FIG. 4 illustrates a cross-sectional view of a fastening device in accordance with an exemplary embodiment of the present disclosure; and
FIG. 5 illustrates a cross-sectional view of a fastening device housed in a receptacle of a pulling sleeve in accordance with an exemplary embodiment of the present disclosure.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right", "horizontal", "vertical", "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

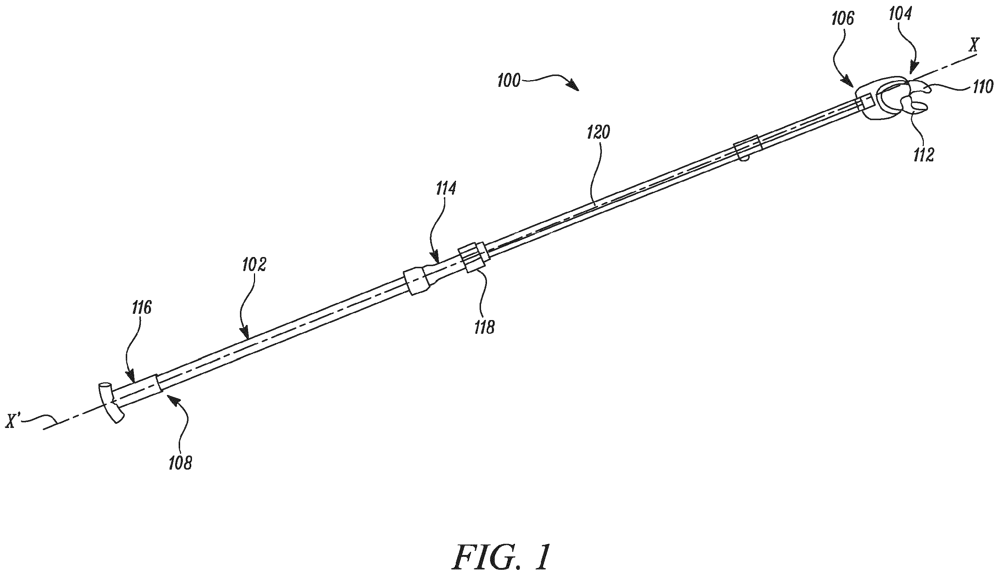

**FIG. 1** illustrates a perspective view of a cutting tool **100.** The cutting tool **100** is a lopper. The cutting tool **100** defines a longitudinal axis **X-X'.** The cutting tool **100** comprises an elongated handle **102** along the longitudinal axis **X-X'.** The elongated handle **102** is a telescopic elongated handle. The elongated handle **102** comprises two handle portions being telescopically movable into each other. The elongated handle **102** comprises a first end **106** and a second end **108** wherein the second end **108** is opposite of the first end **106.** A cutting head **104** is mounted to the first end **106** of the elongated handle **102.** The cutting head **104** is a cutting assembly having a stationary blade **110** and a movable blade **112.** For performing a cutting process, the movable blade **112** is rotatable towards the stationary blade **110** for example by a pivoting arrangement provided in the cutting head **104.**

Further, the cutting tool **100** comprises a pulling sleeve **114** movably mounted to the elongated handle **102** along the longitudinal axis **X-X'** at a position between the first end **106** and the second end **108** of the elongated handle **102.** The pulling sleeve **114** is movable relative to the elongated handle **102** along an extension of the elongated handle **102.** A stop element **118** is fixed to the elongated handle **102** and limits the movement of the pulling sleeve **114** in a direction towards the cutting head **104.**

Further, the cutting tool **100** comprises a pull handle **116.** The pull handle **116** is provided at the second end **108** of the elongated handle **102.** The pull handle **116** is movable relative to the elongated handle **102.** The pull handle **116** has substantially a T-shaped configuration. The cutting head **104** is operable either by using the pulling sleeve **114** or the pull handle **116.**

Further, a pulling means **120** is arranged at least partially in the elongated handle **102** such that a force is transmittable selectively from the pulling sleeve **114** or the pull handle **116** to the cutting head **104** via the pulling means **120.** A respective end of the pulling means **120,** particularly a divided two-parted end of the pulling means **120,** is fastened to the pulling sleeve **114** and the pull handle **116** while the other end of the pulling means **120** is fastened to the movable blade 112 of the cutting head **104.** The pulling means **120** illustrated in **FIG. 1** is a pulling belt and one two-parted split end of the pulling means **120** is fastened to the pulling sleeve **114** and the pull handle **116** while the other end of the pulling means **120** is fastened to the movable blade **112** of the cutting head **104.**

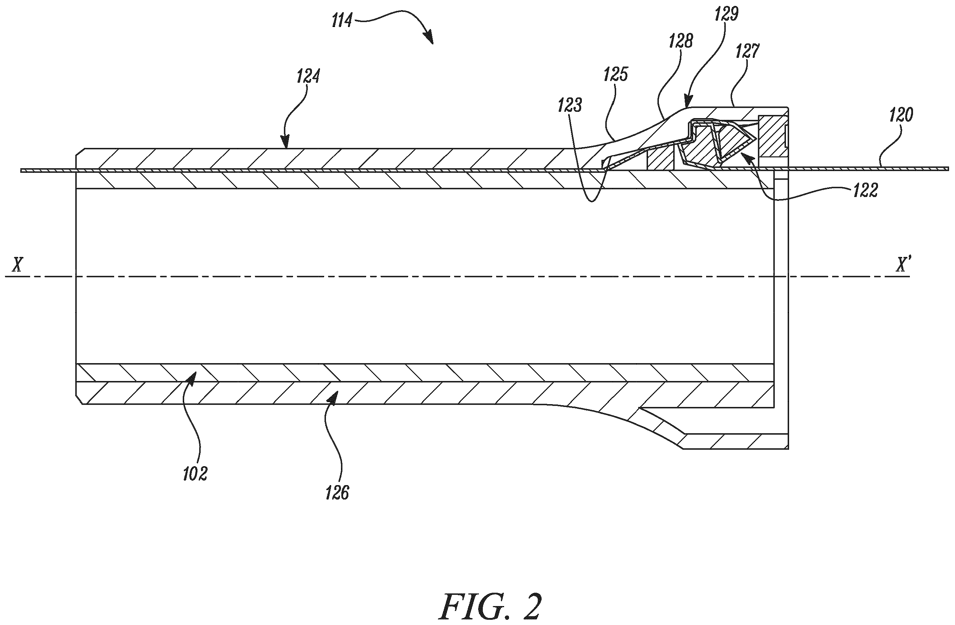

**FIG. 2** illustrates a cross-sectional view of the pulling sleeve **114.** The pulling sleeve **114** comprises a body **124** having a variable circumference. The body **124** comprises an inner surface **123** and an outer surface **125.** The body **124** comprises a first cylindrical part **126,** an inclined part **128** and a second cylindrical part **127.** The inclined part **128** is disposed at a certain angle relative to the cylindrical part **126.** The inclined part 128 interconnects the first cylindrical part **126** and the second cylindrical part **127.** The inclined part **128** and the second cylindrical part **127** form a receptacle **129** configured to insert the fastening device **122.** A fastening device **122** is removably mounted to the pulling sleeve **114.** An end of the pulling means **120** is fastened to the pulling sleeve **114** by the fastening device **122.** The fastening device **122** extends over the inclined part **128** of the circumference of the body **124** of the pulling sleeve **114.**

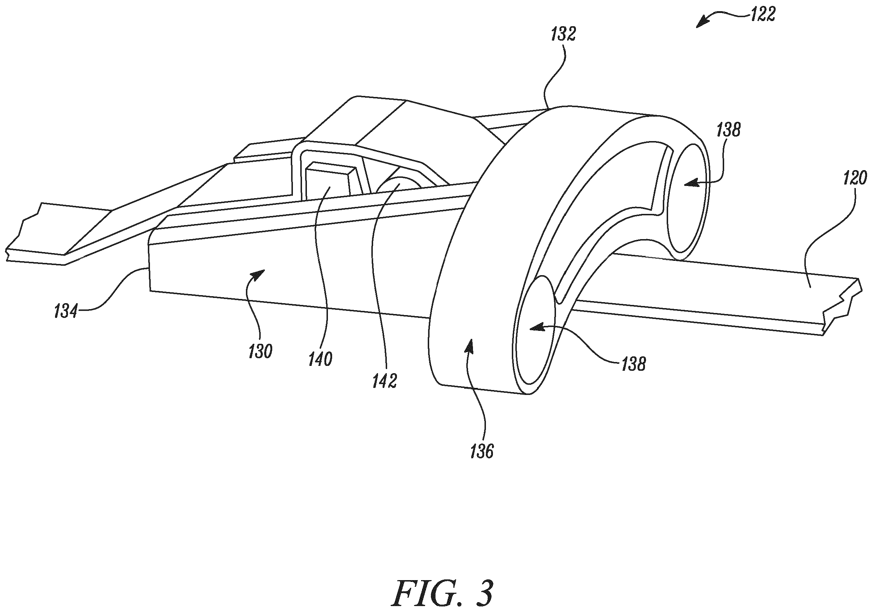

**FIG. 3** illustrates a perspective view of the fastening device **122.** The fastening device **122** comprises a wedge-shaped body **130.** The wedge-shaped body **130** comprises a front end **132** and a back end **134** such that when the fastening device **122** is mounted in the pulling sleeve **114,** the back end **134**faces the cutting head **104** and the front end **132** faces away from the cutting head **104.** The end of the pulling means **120** is guided into respectively enters the fastening device **122** from the back end **134** and at least a part of the end of the pulling means **120** is guided out of respectively leaves the fastening device **122** via the front end **132.**

Further, the front end **132** of the fastening device **122** is integrally formed with a mounting portion **136,** which is a C-shaped structure. In other words, the fastening device **122** comprises the mounting portion **136** at which the fastening device **122** is mounted to the pulling sleeve **114.** The mounting portion **136** comprises a pair of screw holes **138.** The fastening device **122** is screwed by two screws (not shown in **FIG. 3****)** to the pulling sleeve **114.**

Further, formed within the wedge-shaped body **130,** the fastening device **122** comprises a first wrapping element **140** and a second wrapping element **142** positioned adjacent to the first wrapping element **140.** The first wrapping element **140** and the second wrapping element **142** form a ladder buckle. The first wrapping element **140** is disposed behind the second wrapping element **142** when seen along an extension of the elongated handle **102** from the second end **108** towards the first end **106** of the elongated handle **102.** In other words, a position of the first wrapping element **140** is nearer to the cutting head **104** of the cutting tool **100** than a position of the second wrapping element **142.**

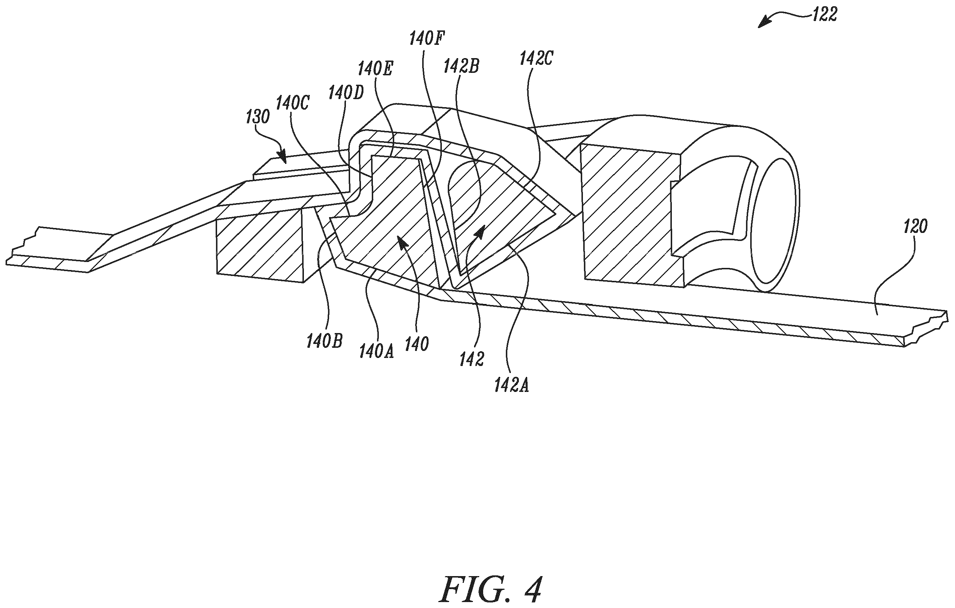

**FIG. 4** illustrates a cross-sectional view of the fastening device **122.** The fastening device **122** comprises the first wrapping element **140** and the second wrapping element **142.** The first wrapping element **140** comprises a substantially arrow-shaped elongated cross-section and the first wrapping element **140** comprises six contact surfaces **140A, 140B, 140C, 140D, 140E,** and **140F,** which are configured to contact the pulling means **120** and are arranged together in a non-linear manner. The cross-section is disposed along a plane parallel to the extension of the elongated handle **102.** Particularly, the cross-section is disposed along a plane comprising the longitudinal axis **X-X.'** In other words, the first wrapping element **140** comprises substantially arrow-shaped elongated cross-section disposed along the plane parallel to the longitudinal axis **X-X'** of the cutting tool **100** and further The first wrapping element **140** comprises six contact surfaces **140A, 140B, 140C, 140D, 140E,** and **140F,** which are configured to contact the pulling means **120.** Further, the second wrapping element **142** comprises a triangular cross-section and three contact surfaces **142A, 142B,** and **142C** which are arranged together in a non-linear manner. The triangular cross-section is disposed along a plane parallel to the extension of the elongated handle 102. In other words, the second wrapping element 142 comprises the triangular cross-section disposed along the plane parallel to the longitudinal axis **X-X'** of the cutting tool **100** and further the second wrapping element **142** comprises three contact surfaces **142A, 142B,** and **142C,** which are configured to contact the pulling means **120.** The contact surface **140F** of the first wrapping element **140** faces respectively is formed adjacent to the contact surface **142B** of the second wrapping element **142.**

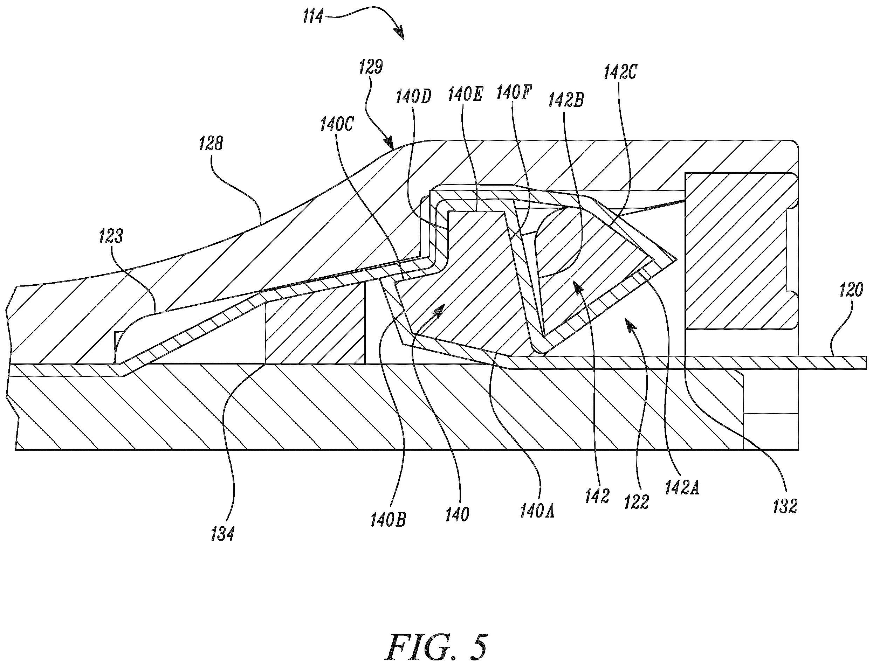

**FIG. 5** illustrates a cross-sectional view of the fastening device **122** housed in the receptacle **129** formed in the pulling sleeve **114.** For fastening the end of the pulling means **120,** firstly the end of the pulling means **120** is guided loosely over the contact surface **140C,** the contact surface **140D** and the contact surface **140E** of the first wrapping element 140 followed by at least partially engaging with each of the three contact surfaces **142A, 142B,** and **142C** of the second wrapping element **142.** Then, the end of the pulling means **120** is guided between the contact surface **142B** of the second wrapping element **140** and the contact surface **140F** of the first wrapping element **140.** Further, the parts of the end of the pulling means 120 at least partially engaged with the at least three contact surfaces **140E, 140D,** and **140C** of the first wrapping element **140** are superimposed by the parts of the end of the pulling means **120** loosely guided over the contact surfaces **140C, 140D** and **140E** of the first wrapping element **140.**

Further, the parts of the end of the pulling means **120** that superimpose each other are additionally sandwiched between the contact surfaces **140E, 140D** and **140C** of the first wrapping element **140** and the inner surface **123** of the inclined part **128** and the second cylindrical part **126**.The inner surface **123** and the contact surfaces **140C, 140D** and **140E** exhibit opposite, in particular equal, forces on the different parts of the end of the pulling means **120** that superimpose each other. Thereby the end of the pulling means **120** is securely fastened to the pulling sleeve **114.**

Further, when the end of the pulling means **120** is guided between and around the first wrapping element **140** and the second wrapping element **142** such that different parts of the end of the pulling means **120** superimpose each other, the pulling means **120** tightens around the first wrapping element **140** and the second wrapping element **142** under a tensile force generated particularly when the pulling sleeve **114** is moved in the direction away from the cutting head **104** along the longitudinal axis **X-X'.** The tightening of the pulling means **120** prevents the pulling means **120** from slipping.

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Cutting Tool
- **102**: Elongated Handle
- **104**: Cutting Head
- **106**: First End
- **108**: Second End
- **110**: Stationary Blade
- **112**: Movable Blade
- **114**: Pulling Sleeve
- **116**: Pull Handle
- **118**: Stop Element
- **120**: Pulling Means
- **122**: Fastening Device
- **123**: Inner Surface
- **124**: Body
- **125**: Outer Surface
- **126**: First Cylindrical Part
- **127**: Second Cylindrical Part
- **128**: Inclined Part
- **129**: Receptacle
- **130**: Wedge-Shaped Body
- **132**: Front End
- **134**: Back End
- **136**: Mounting Portion
- **138**: Screw Holes
- **140**: First Wrapping Element
- **140A**: Contact Surface
- **140B**: Contact Surface
- **140C**: Contact Surface
- **140D**: Contact Surface
- **140E**: Contact Surface
- **140F**: Contact Surface
- **142**: Second Wrapping Element
- **142A**: Contact Surface
- **142B**: Contact Surface
- **142C**: Contact Surface
- **X-X'**: Longitudinal Axis

## Claims

1. A cutting tool **(100),** particularly a lopper, comprising:
an elongated handle **(102),**
a cutting head **(104)** mounted to a first end **(106)** of the elongated handle **(102),**
a pulling sleeve **(114)** mounted to the elongated handle **(102)** at a position between the first end **(106)** and a second end **(108)** being opposite to the first end **(106),**
wherein the pulling sleeve **(114)** is movable relative to the elongated handle **(102)** along an extension of the elongated handle **(102),**
a pulling means **(120)** arranged at least partially in the elongated handle **(102)** such that a force is transmittable from the pulling sleeve **(114)** to the cutting head **(104)** via the pulling means **(120),** wherein an end of the pulling means **(120)** is fastened to the pulling sleeve **(114)** by a fastening device **(122),**
wherein the fastening device **(122)** comprises
a mounting portion **(136)** at which the fastening device **(122)** is mounted to the pulling sleeve **(114),**
**characterized in that:**
the fastening device **(122)** further comprises
a first wrapping element **(140)** and a second wrapping element **(142)** positioned adjacent to the first wrapping element **(140),** wherein the end of the pulling means **(120)** is guided between and around the first wrapping element **(140)** and the second wrapping element **(142)** such that different parts of the end of the pulling means **(120)** superimpose each other so that under a tensile force the pulling means **(120)** tightens around the first wrapping element **(140)** and the second wrapping element **(142).**

2. The cutting tool **(100)** according to claim **1,**
wherein the fastening device **(122)** is fastened to, particularly screwed into, the pulling sleeve **(114),** more particularly screwed by using at least one screw.

3. The cutting tool **(100)** according to any one of the preceding claims, wherein a position of the fastening device **(122)** on the end of the pulling means **(120)** is movable and adjustable relative to the pulling means **(120)** when the fastening device **(122)** is loosened and/or unmounted from the pulling sleeve **(114).**

4. The cutting tool **(100)** according to any one of the preceding claims, wherein the first wrapping element **(140)** and/ or the second wrapping element **(142)** is configured such that the pulling means **(120)** is prevented from slipping, when the pulling means **(120)** is tightened.

5. The cutting tool **(100)** according to any one of the preceding claims, wherein the pulling sleeve **(114)** comprises a first cylindrical part **(126)** being in contact with the elongated handle **(102),** an inclined part **(128),** and a second cylindrical part **(127),** wherein the inclined part **(128)** interconnects the first cylindrical part **(126)** and the second cylindrical part **(127)**,and wherein the inclined part **(128)** and the second cylindrical part **(127)** form a receptacle **(129)** configured to insert the fastening device **(122).**

6. The cutting tool **(100)** according to any one of the preceding claims,
wherein the first wrapping element **(140)** comprises a substantially arrow-shaped elongated cross-section, and/or
wherein the first wrapping element **(140)** comprises six contact surfaces **(140A, 140B, 140C, 140D, 140E, 140F),** which are configured to contact the pulling means **(120).**

7. The cutting tool **(100)** according to any one of the preceding claims,
wherein the second wrapping element **(142)** comprises a substantially triangular cross-section, and/or
wherein the second wrapping element **(142)** comprises three contact surfaces **(142A, 142B, 142C).**

8. The cutting tool **(100)** according to any one of the preceding claims,
wherein the end of the pulling means **(120)** is guided between and around the first wrapping element **(140)** and the second wrapping element **(142)** of the fastening device **(122)** by firstly guiding the end of the pulling means **(120)** loosely over the first wrapping element **(140)** followed by at least partially engaging with each of the three contact surfaces **(142A, 142B, 142C)** of the second wrapping element **(142)** before at least partially engaging with each of the six contact surfaces **(140A, 140B, 140C, 140D, 140E, 140F)** of the first wrapping element **(140),**
wherein the parts of the end of the pulling means **(120)** which are at least partially engaged with the at least three contact surfaces **(140E, 140D, 140C)** of the first wrapping element **(140),** are superimposed by the parts of the end of the pulling means **(120)** loosely guided over the first wrapping element **(140).**

9. The cutting tool **(100)** according to any one of the preceding claims,
wherein the pulling sleeve **(114)** comprises a first cylindrical part **(126)** being in contact with the elongated handle **(102),** an inclined part **(128),** and a second cylindrical part **(127),** wherein the inclined part **(128)** interconnects the first cylindrical part **(126)** and the second cylindrical part **(127),and** wherein the inclined part **(128)** and the second cylindrical part **(127)** form a receptacle **(129)** configured to insert the fastening device **(122),** and
wherein the different parts of the end of the pulling means **(120)** that superimpose each other are sandwiched between the first wrapping element **(140)** and an inner surface **(123)** of the inclined part **(128),** and/or wherein the first wrapping element **(140)** and the pulling sleeve **(114)** respectively exhibit opposite, in particular equal, forces on the different parts of the end of the pulling means **(120)** that superimpose each other.

10. The cutting tool **(100)** according to any one of the preceding claims, wherein a position of the first wrapping element **(140)** is nearer to the cutting head **(104)** of the cutting tool **(100)** than a position of the second wrapping element **(142).**

11. The cutting tool **(100)** according to any one of the preceding claims, wherein the first wrapping element **(140)** is disposed behind the second wrapping element **(142)** when seen along an extension of the elongated handle **(102),** from the second end **(108)** towards the first end **(106).**

12. The cutting tool **(100)** according to any one of the preceding claims, wherein the first wrapping element **(140)** and the second wrapping element **(142)** form a ladder buckle.

13. The cutting tool **(100)** according to any one of the preceding claims, wherein the elongated handle **(102)** is a telescopic elongated handle, and wherein the elongated handle **(102)** comprises at least two, particularly three, handle portions being telescopically movable into each other.

14. The cutting tool **(100)** according any one of the preceding claims, wherein the pulling means **(120)** is a pulling belt.

15. The cutting tool **(100)** according any one of the preceding claims,
wherein the cutting tool **(100)** comprises a pull handle **(116)** provided at the second end **(108)** of the elongated handle **(102),** and
wherein the pull handle **(116)** is movable relative to the elongated handle **(102).**

## Patentansprüche

1. Schneidewerkzeug **(100),** insbesondere eine Astschere, umfassend:
einen länglichen Griff **(102),**
einen Schneidkopf **(104),** der an einem ersten Ende **(106)** des länglichen Griffs **(102)** montiert ist,
eine Zughülse **(114),** die an dem länglichen Griff **(102)** an einer Position zwischen dem ersten Ende **(106)** und einem zweiten Ende **(108)** montiert ist, das dem ersten Ende **(106)** gegenüberliegt,
wobei die Zughülse **(114)** relativ zu dem länglichen Griff **(102)** entlang einer Verlängerung des länglichen Griffs **(102)** beweglich ist,
ein Zugmittel **(120),** das mindestens teilweise in dem länglichen Griff **(102)** angeordnet ist, so dass eine Kraft von der Zughülse **(114)** über das Zugmittel **(120)** auf den Schneidkopf **(104)** übertragbar ist,
wobei ein Ende des Zugmittels **(120)** an der Zughülse **(114)** durch eine Befestigungsvorrichtung **(122)** befestigt ist,
wobei die Befestigungsvorrichtung **(122)**
einen Montageabschnitt **(136)** umfasst, an dem die Befestigungsvorrichtung **(122)** an der Zughülse **(114)** montiert ist,
**dadurch gekennzeichnet, dass:**
die Befestigungsvorrichtung **(122)** ferner ein erstes Umhüllungselement **(140)** und ein zweites Umhüllungselement **(142),** das benachbart zu dem ersten Umhüllungselement **(140)** positioniert ist, umfasst, wobei das Ende des Zugmittels **(120)** zwischen und um das erste Umhüllungselement **(140)** und das zweite Umhüllungselement **(142)** geführt ist, derart, dass sich verschiedene Teile des Endes des Zugmittels **(120)** überlagern, so dass sich unter einer Zugkraft das Zugmittel **(120)** um das erste Umhüllungselement **(140)** und das zweite Umhüllungselement **(142)** festzieht.

2. Schneidewerkzeug **(100)** nach Anspruch **1,**
wobei die Befestigungsvorrichtung **(122)** an der Zughülse **(114)** befestigt ist, insbesondere in diese eingeschraubt ist, insbesondere mittels mindestens einer Schraube eingeschraubt ist.

3. Schneidewerkzeug **(100)** nach einem der vorstehenden Ansprüche, wobei eine Position der Befestigungsvorrichtung **(122)** an dem Ende des Zugmittels **(120)** beweglich und einstellbar relativ zu dem Zugmittel **(120)** ist, wenn die Befestigungsvorrichtung **(122)** von der Zughülse **(114)** gelöst und/oder abmontiert ist.

4. Schneidewerkzeug **(100)** nach einem der vorstehenden Ansprüche, wobei das erste Umhüllungselement **(140)** und/oder das zweite Umhüllungselement **(142)** so konfiguriert sind, dass das Zugmittel **(120)** am Verrutschen gehindert wird, wenn das Zugmittel **(120)** angezogen wird.

5. Schneidewerkzeug **(100)** nach einem der vorstehenden Ansprüche, wobei die Zughülse **(114)** einen ersten zylindrischen Teil **(126),** der in Kontakt mit dem länglichen Griff **(102)** steht, einen geneigten Teil **(128)** und einen zweiten zylindrischen Teil **(127)** umfasst, wobei der geneigte Teil **(128)** den ersten zylindrischen Teil **(126)** und den zweiten zylindrischen Teil **(127)** miteinander verbindet, und wobei der geneigte Teil **(128)** und der zweite zylindrische Teil **(127)** eine Aufnahme **(129)** bilden, die konfiguriert ist, um die Befestigungsvorrichtung **(122)** einzusetzen.

6. Schneidewerkzeug **(100)** nach einem der vorstehenden Ansprüche, wobei das erste Umhüllungselement **(140)** einen im Wesentlichen pfeilförmigen länglichen Querschnitt umfasst, und/oder wobei das erste Umhüllungselement **(140)** sechs Kontaktflächen **(140A, 140B, 140C, 140D, 140E, 140F)** umfasst, die konfiguriert sind, um das Zugmittel **(120)** zu kontaktieren.

7. Schneidewerkzeug **(100)** nach einem der vorstehenden Ansprüche,
wobei das zweite Umhüllungselement **(142)** einen im Wesentlichen dreieckigen Querschnitt umfasst, und/oder
wobei das zweite Umhüllungselement **(142)** drei Kontaktflächen **(142A, 142B, 142C)** umfasst.

8. Schneidewerkzeug **(100)** nach einem der vorstehenden Ansprüche, wobei das Ende des Zugmittels **(120)** zwischen und um das erste Umhüllungselement **(140)** und das zweite Umhüllungselement **(142)** der Befestigungsvorrichtung **(122)** geführt wird, indem zunächst das Ende des Zugmittels **(120)** lose über das erste Umhüllungselement **(140)** geführt wird, gefolgt von einem mindestens teilweisen Eingriff mit jeder der drei Kontaktflächen **(142A, 142B, 142C)** des zweiten Umhüllungselements **(142),** bevor es mindestens teilweise mit jeder der sechs Kontaktflächen **(140A, 140B, 140C, 140D, 140E, 140F)** des ersten Umhüllungselements **(140)** in Eingriff kommt, wobei die Teile des Endes des Zugmittels **(120),** die mindestens teilweise mit den mindestens drei Kontaktflächen **(140E, 140D, 140C)** des ersten Umhüllungselements **(140)** in Eingriff stehen, von den Teilen des Endes des Zugmittels **(120)** überlagert werden, die lose über das erste Umhüllungselement **(140)** geführt sind.

9. Schneidewerkzeug **(100)** nach einem der vorstehenden Ansprüche, wobei die Zughülse **(114)** einen ersten zylindrischen Teil **(126),** der in Kontakt mit dem länglichen Griff **(102)** steht, einen geneigten Teil **(128)** und einen zweiten zylindrischen Teil **(127)** umfasst, wobei der geneigte Teil **(128)** den ersten zylindrischen Teil **(126)** und den zweiten zylindrischen Teil **(127)** miteinander verbindet, und wobei der geneigte Teil **(128)** und der zweite zylindrische Teil **(127)** eine Aufnahme **(129)** bilden, die konfiguriert ist, um die Befestigungsvorrichtung **(122)** einzusetzen, und
wobei die verschiedenen Teile des Endes des Zugmittels **(120),** die sich überlagern, sandwichartig zwischen dem ersten Umhüllungselement **(140)** und einer inneren Oberfläche **(123)** des geneigten Teils **(128)** angeordnet sind, und/oder
wobei das erste Umhüllungselement **(140)** und die Zughülse **(114)** jeweils entgegengesetzte, insbesondere gleiche, Kräfte auf die verschiedenen Teile des Endes des Zugmittels **(120)** ausüben, die sich überlagern.

10. Schneidewerkzeug **(100)** nach einem der vorstehenden Ansprüche, wobei eine Position des ersten Umhüllungselements **(140)** näher zum Schneidkopf **(104)** des Schneidewerkzeugs **(100)** ist als eine Position des zweiten Umhüllungselements **(142).**

11. Schneidewerkzeug **(100)** nach einem der vorstehenden Ansprüche, wobei das erste Umhüllungselement **(140)** entlang einer Erstreckung des länglichen Griffs **(102)** vom zweiten Ende **(108)** zum ersten Ende **(106)** hin gesehen hinter dem zweiten Umhüllungselement **(142)** angeordnet ist.

12. Schneidewerkzeug **(100)** nach einem der vorstehenden Ansprüche, wobei das erste Umhüllungselement **(140)** und das zweite Umhüllungselement **(142)** eine Leiterschnalle bilden.

13. Schneidewerkzeug **(100)** nach einem der vorstehenden Ansprüche, wobei der längliche Griff **(102)** ein teleskopischer länglicher Griff ist, und wobei der längliche Griff **(102)** mindestens zwei, insbesondere drei, Griffabschnitte umfasst, die teleskopisch ineinander beweglich sind.

14. Schneidewerkzeug **(100)** nach einem der vorstehenden Ansprüche, wobei das Zugmittel **(120)** ein Zugriemen ist.

15. Schneidewerkzeug **(100)** nach einem der vorstehenden Ansprüche, wobei das Schneidewerkzeug **(100)** einen Zuggriff **(116)** umfasst, der am zweiten Ende **(108)** des länglichen Griffs **(102)** bereitgestellt ist, und wobei der Zuggriff **(116)** relativ zu dem länglichen Griff **(102)** bewegbar ist.

## Revendications

1. Outil de coupe **(100),** en particulier ébrancheur, comprenant :
une poignée allongée **(102),**
une tête de coupe **(104)** montée sur une première extrémité **(106)** de la poignée allongée **(102),**
un manchon de traction **(114)** monté sur la poignée allongée **(102)** au niveau d'une position située entre la première extrémité **(106)** et une seconde extrémité **(108)** opposée à la première extrémité **(106),**
dans lequel le manchon de traction **(114)** est mobile par rapport à la poignée allongée **(102)** le long d'une extension de la poignée allongée **(102),**
un moyen de traction **(120)** disposé au moins partiellement dans la poignée allongée **(102)** de telle sorte qu'une force peut être transmise du manchon de traction **(114)** à la tête de coupe **(104)** par l'intermédiaire du moyen de traction **(120),**
dans lequel une extrémité du moyen de traction **(120)** est fixée au manchon de traction **(114)** par un dispositif de fixation **(122),**
dans lequel le dispositif de fixation **(122)** comprend
une partie de montage **(136)** au niveau de laquelle le dispositif de fixation **(122)** est monté sur le manchon de traction **(114),**
**caractérisé en ce que** :
le dispositif de fixation **(122)** comprend en outre un premier élément d'enveloppement **(140)** et un second élément d'enveloppement **(142)** positionné de manière à être adjacent au premier élément d'enveloppement **(140),** dans lequel l'extrémité du moyen de traction **(120)** est guidée entre le premier élément d'enveloppement **(140)** et le second élément d'enveloppement **(142)** et autour de ceux-ci de telle sorte que différentes parties de l'extrémité du moyen de traction **(120)** se superposent de sorte que, sous l'action d'une force de traction, le moyen de traction **(120)** se resserre autour du premier élément d'enveloppement **(140)** et du second élément d'enveloppement **(142).**

2. Outil de coupe **(100)** selon la revendication 1,
dans lequel le dispositif de fixation **(122)** est fixé au manchon de traction **(114),** en particulier vissé dans celui-ci, plus particulièrement vissé à l'aide d'au moins une vis.

3. Outil de coupe **(100)** selon l'une quelconque des revendications précédentes, dans lequel une position du dispositif de fixation **(122)** sur l'extrémité du moyen de traction **(120)** est mobile et réglable par rapport au moyen de traction **(120)** lorsque le dispositif de fixation **(122)** est desserré et/ou démonté du manchon de traction **(114).**

4. Outil de coupe **(100)** selon l'une quelconque des revendications précédentes, dans lequel le premier élément d'enveloppement **(140)** et/ou le second élément d'enveloppement **(142)** sont conçus de telle sorte que le glissement du moyen de traction **(120)** est empêché, lorsque le moyen de traction **(120)** est serré.

5. Outil de coupe **(100)** selon l'une quelconque des revendications précédentes, dans lequel le manchon de traction **(114)** comprend une première partie cylindrique **(126)** en contact avec la poignée allongée **(102),** une partie inclinée **(128),** et une seconde partie cylindrique **(127),** dans lequel la partie inclinée **(128)** relie entre elles la première partie cylindrique **(126)** et la seconde partie cylindrique **(127),** et dans lequel la partie inclinée **(128)** et la seconde partie cylindrique **(127)** forment un réceptacle **(129)** conçu pour l'insertion du dispositif de fixation **(122).**

6. Outil de coupe **(100)** selon l'une quelconque des revendications précédentes, dans lequel le premier élément d'enveloppement **(140)** comprend une section transversale allongée sensiblement en forme de flèche, et/ou dans lequel le premier élément d'enveloppement **(140)** comprend six surfaces de contact **(140A, 140B, 140C, 140D, 140E, 140F),** qui sont conçues pour entrer en contact avec le moyen de traction **(120).**

7. Outil de coupe **(100)** selon l'une quelconque des revendications précédentes,
dans lequel le second élément d'enveloppement **(142)** comprend une section transversale sensiblement triangulaire, et/ou
dans lequel le second élément d'enveloppement **(142)** comprend trois surfaces de contact **(142A, 142B, 142C).**

8. Outil de coupe **(100)** selon l'une quelconque des revendications précédentes, dans lequel l'extrémité du moyen de traction **(120)** est guidée entre le premier élément d'enveloppement **(140)** et le second élément d'enveloppement **(142)** du dispositif de fixation **(122)** et autour de ceux-ci par le guidage en premier lieu de l'extrémité du moyen de traction **(120)** librement sur le premier élément d'enveloppement **(140),** puis par une mise en prise au moins partielle avec chacune parmi les trois surfaces de contact **(142A, 142B, 142C)** du second élément d'enveloppement **(142)** avant une mise en prise au moins partielle avec chacune parmi les six surfaces de contact **(140A, 140B, 140C, 140D, 140E, 140F)** du premier élément d'enveloppement **(140),** dans lequel les parties de l'extrémité du moyen de traction **(120)** qui sont au moins partiellement en prise avec les au moins trois surfaces de contact **(140E, 140D, 140C)** du premier élément d'enveloppement **(140)** sont superposées aux parties de l'extrémité du moyen de traction **(120)** librement guidées sur le premier élément d'enveloppement **(140).**

9. Outil de coupe **(100)** selon l'une quelconque des revendications précédentes, dans lequel le manchon de traction **(114)** comprend une première partie cylindrique **(126)** en contact avec la poignée allongée **(102),** une partie inclinée **(128),** et une seconde partie cylindrique **(127),** dans lequel la partie inclinée **(128)** relie entre elles la première partie cylindrique **(126)** et la seconde partie cylindrique **(127),** et dans lequel la partie inclinée **(128)** et la seconde partie cylindrique **(127)** forment un réceptacle **(129)** conçu pour l'insertion du dispositif de fixation **(122),** et
dans lequel les différentes parties de l'extrémité du moyen de traction **(120)** qui se superposent sont intercalées entre le premier élément d'enveloppement **(140)** et une surface interne **(123)** de la partie inclinée **(128),** et/ou
dans lequel le premier élément d'enveloppement **(140)** et le manchon de traction **(114)** présentent respectivement des forces opposées, en particulier égales, sur les différentes parties de l'extrémité du moyen de traction **(120)** qui se superposent.

10. Outil de coupe **(100)** selon l'une quelconque des revendications précédentes, dans lequel une position du premier élément d'enveloppement **(140)** est plus proche de la tête de coupe **(104)** de l'outil de coupe **(100)** qu'une position du second élément d'enveloppement **(142).**

11. Outil de coupe **(100)** selon l'une quelconque des revendications précédentes, dans lequel le premier élément d'enveloppement **(140)** est disposé derrière le second élément d'enveloppement **(142)** lorsqu'il est vu le long d'une extension de la poignée allongée **(102),** de la seconde extrémité **(108)** vers la première extrémité **(106).**

12. Outil de coupe **(100)** selon l'une quelconque des revendications précédentes, dans lequel le premier élément d'enveloppement **(140)** et le second élément d'enveloppement **(142)** forment une boucle à double barrette.

13. Outil de coupe **(100)** selon l'une quelconque des revendications précédentes, dans lequel la poignée allongée **(102)** est une poignée allongée télescopique, et dans lequel la poignée allongée **(102)** comprend au moins deux, en particulier trois, parties de poignée mobiles de manière télescopique les unes dans les autres.

14. Outil de coupe **(100)** selon l'une quelconque des revendications précédentes, dans lequel le moyen de traction **(120)** est une courroie de traction.

15. Outil de coupe **(100)** selon l'une quelconque des revendications précédentes, dans lequel l'outil de coupe **(100)** comprend une poignée de traction **(116)** fournie au niveau de la seconde extrémité **(108)** de la poignée allongée **(102),** et dans lequel la poignée de traction **(116)** est mobile par rapport à la poignée allongée **(102).**
